(19) Europäisches Patentamt
European Patent Office
Office européen des brevets

(11) **EP 4 596 519 A1**

(12) **EUROPEAN PATENT APPLICATION**

(43) Date of publication:
06.08.2025 Bulletin 2025/32

(21) Application number: 25155121.4

(22) Date of filing: 30.01.2025

(51) International Patent Classification (IPC):
**C04B 35/117** (2006.01)   **C04B 35/119** (2006.01)
**C04B 35/44** (2006.01)   **C04B 35/645** (2006.01)
**C04B 35/653** (2006.01)

(52) Cooperative Patent Classification (CPC):
**C04B 35/645; C04B 35/117; C04B 35/119;**
**C04B 35/44; C04B 35/653;** C04B 2235/3217;
C04B 2235/3222; C04B 2235/3224;
C04B 2235/3225; C04B 2235/3227;
C04B 2235/3244; C04B 2235/3286;
C04B 2235/6562; C04B 2235/6567;
C04B 2235/666;   (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 30.01.2024 SK 500072024

(71) Applicant: Trencianska Univerzita Alexandra
Dubceka
V Trencíne
91150 Trencín (SK)

(72) Inventors:
• **Vakhshouri, Maryam**
911 01 Trencín (SK)
• **Najafzadehkhoee, Aliasghar**
911 01 Trencín (SK)
• **Talimian, Ali**
911 05 Trencín (SK)
• **Galusek, Du an**
911 05 Trencín (SK)

(74) Representative: **Kubinyi, Peter**
**Piaristicka 9**
**911 01 Trencin (SK)**

(54) **A METHOD FOR PRODUCING AL2O3-BASED EUTECTIC CERAMICS COMPOSITES**

(57) A method for producing $Al_2O_3$-based eutectic ceramics composites with the composition of $Al_2O_3$-$RE_3Al_5O_{12}$, $REAlO_3$, or $RE_4AlO_9$, where RE is one of the rare earth elements chosen from the group composed of Y, Sc, Dy, Ho, Er, Tm, Yb, La, or Ga, comprising synthesizing composite powders following Pechini's method and consolidating the powder using a spark plasma sintering apparatus by applying constant pressure of 5-100 MPa, heating rate between 10 - 200°C $min^{-1}$, and dwelling temperature and time of 1000-1500°C and 1-10 min, respectively. The powders are synthesized using Pechini's method with the use of citric acid and ethylene glycol as gelation agents, and the synthesized powders are heat-treated at temperatures between 600 and 1200 °C and dwelling time between 3 and 24h, wherein eutectic microstructure of produced ceramic material is determined by concentration of the gelation agents and conditions of the heat treatment.

Figure 1

(52) Cooperative Patent Classification (CPC): (Cont.)
    C04B 2235/764; C04B 2235/80

## Description

## Technical Field

The present invention relates to a method for the production of $Al_2O_3$-based eutectic ceramic composites.

## Background Art

Conventionally, multiphase ceramic composites are produced by mixing ceramic powders, shaping, and sintering. The objects are densified using different sintering methods depending on the chemical composition of the precursor powders and the concentration of the phases in the composite, such as high-temperature, >1600°C, pressure-less sintering, hot pressing, sinter forging, spark plasma sintering (SPS). The microstructural features of ceramic composites can be tailored by carefully selecting composite composition, precursor powders, and the sintering process, thereby modifying the properties of composites, e.g., thermal proper mechanical performance.

However, most ceramic composites are characterized by the random distribution of secondary phases in a continuum matrix, and there are limitations to obtaining different microstructural patterns, such as dendritic or laminar. The conventional fabrication method is based on mixing powders, whereby the particles and, in turn, the grains in the final microstructure will be placed randomly together.

The growth from melt methods, based on the Bridgman technique, is conventionally used to produce ceramics with eutectic microstructure; however, there are limits to the shape of the product. Also, the growth from melt method is expensive. The powder metallurgy approach is alternatively used to fabricate large eutectic materials with a desired shape by sintering a eutectic powder compact.

The eutectic powder is often obtained by crushing and grinding the solid eutectic body produced by controlled solidification from a melt. Alternatively, the eutectic powder can be synthesized by the flame synthesis method, which produces sphere powder that is characterized by higher flowability than the crushed powder. High-temperature sintering or pressure-assisted techniques, e.g., hot pressing or hot isostatic pressing, are often required to densify the powder compacts. However, the melting of precursor powders dramatically increases the production cost and effectively makes the process uneconomical. Moreover, non-conventional sintering methods, such as spark plasma sintering, are necessary to obtain high-density eutectic ceramics with desired properties.

Spark plasma sintering, hereafter abbreviated as "SPS," enables the fabrication of dense ceramics in a short time because of the electric discharges and sparking that are presumably generated in the voids between the particles during the sintering process. Although a controversial phenomenon with no conclusive explanation, the sparks increase the temperature locally, whereby the surface purification of the particles, along with the fast diffusion of atoms, which results in the promotion of densification.

The electric discharge and sparking can result in the local melting of ceramics powder during SPS. The mean free path of electric discharge and, in turn, the generation of spark depends on pressure, the gap distance, which is equal to the diameter of voids between particles in SPS, and the ion-induced secondary electron emission coefficient of materials following Paschen's empirical formula:

$$U_B = \frac{Bpd}{\ln(Apd) - \ln\left(\ln\left(1 + \frac{1}{\gamma}\right)\right)}$$

Where $U_B$ is the breakdown voltage, p being the pressure, d is the gap distance (analogically resembling the cavity diameters between the ceramic particles). $A$ and $B$ are materials constant that are empirically determined for each gas. The local or chamber pressure/atmosphere can be modified by careful selection of volatile gasses from ceramic powder during SPS, wherein the changes in the atmosphere through changes in $A$, $B$, and $\gamma$, result in spark formation and an increase in temperature.

Object of the present invention is to eliminate at least one of the disadvantages of the background art.

## Disclosure of the invention

Said object is achieved by a method for producing ceramic materials with eutectic microstructures, including Chinese script, complex-regular lamellae, and randomly distributed islands, following a semi-solid forming approach using spark plasma sintering according to the present invention.

The present invention provides a method for producing bulk ceramics with eutectic microstructure using spark plasma sintering apparatus and tailoring the microstructural features by exploiting electric discharge induced by vacuum change during spark plasma sintering as a result of thermal decomposition of partially calcined powders produced by Pechini's method.

In particular, the present invention provides a method for producing $Al_2O_3$-based eutectic ceramics composites, comprising synthesizing composite powders following Pechini's method and consolidating the powder using a spark plasma sintering apparatus by applying constant pressure of 5-100 MPa, heating rate between 10-200 °C min$^{-1}$, and dwelling temperature and time of 1000-1500 °C and 1-10 min, respectively.

In the present invention, the powder was synthesized using Pechini's method with the use of citric acid and ethylene glycol as gelation agents and nitrate salts or solutions of aluminum and yttrium as starting precursor, followed by partial heat treatment at temperatures between 600 and 1100 °C and dwelling time between 3 and 24h.

Various eutectic microstructures are produced by the selection of gelation additives, calcination temperature, and time; this includes an irregular structure with wootz steel microstructure, complex-regular laminar, mixed dendritic/laminar, and continuum matrix with randomly dispersed secondary phase.

## Brief description of drawings

Figure 1 is a scanning electron microscope photograph of the produced mixed laminar-ordered structure;

Figure 2 is a scanning electron microscope photograph of the produced "wootz steel" complex structure;

Figure 3 is a scanning electron microscope photograph of the produced randomly distributed particles.

## Detailed Description

The utilization of electric discharge and arc formation during spark plasma sintering, further abbreviated to SPS, is one of the features of this invention. The present inventors have given attention to exploiting the yield of gases due to the decomposition of partially calcined precursor oxide powders whereby the chamber atmosphere is altered during SPS, thereby proving the conditions for the partial melting of powder compacts. The released gases are altered by changing the precursor powder composition, enabling spark formation and local melting.

SPS is often performed under a medium vacuum, e.g., about 10 Pa, that is required to prevent the oxidation of graphite die and punches through which pressure is applied; at the same time, applied electric current is allowed to pass through the graphite die or the powder compact; the electric current passing heats up the powder, die and punches due to resistance heating of graphite die. The increase in temperature results in the thermal decomposition of partially calcined powders, thereby changing the pressure of the vacuum and the gas composition.

During the SPS process, with the increase in temperature, electric conduction is achieved, and most of the electric current passes through the graphite punches/die structure that encloses the ceramic powder. However, current leakage occurs through the graphite die/-punches and the powder interface, even though the sintering powder may not be conductive. Using pulsed current with direct polarization may result in the formation of sparks and electric discharge between the powder. In the present invention, localized electric discharges are exploited to produce the liquid phase required for the semi-solid forming of eutectic ceramics; this resulted in powder purification and densification. Moreover, the production of the liquid phase provides the conditions for the solidification and crystallization of the eutectic microstructure.

The partial formation of the liquid phase enabled obtaining a solid-liquid mixture that allows shaping and densification of ceramics compacts following the semi-solid approach. Moreover, the liquid phase provides the conditions for grain growth, yielding eutectic microstructures. Modifying the spark discharge conditions allows for tailoring the final microstructure of ceramics.

In this work, the inventors have found that due to the impact of the liquid phase, fast growth of crystals occurs. It was found that there is a preferential orientation within the eutectic grains.

In the present innovations, interconnected dendritic microstructure where the major phase with cubic structure $Y_3Al_5O_{12}$ exhibits preferential orientation is produced.

As other examples of the Wootz steel structure, the laminar eutectic microstructure can be given; the produced microstructures were produced by modifying the composition of precursor chemicals used in the synthesis step, Pechini's method and partial removal of the volatile species in order to produce the spark conditions during SPS.

As another example, a random microstructure comprising insulated $Y_3Al_5O_{12}$ randomly dispersed in an $Al_2O_3$ matrix can be given.

In the present invention, a typical synthesized powder consists of partially crystallized $Y_3Al_5O_{12}$ and a mixture of XRD (X-ray diffractometry) amorphous $Y_3Al_5O_{12}/Al_2O_3/ZrO_2$. The powder is prepared by mixing nitrate salts of yttrium and aluminium and zirconium, followed by the addition of gelation agents, citric acid and ethylene glycol, following Pechini's method. The synthesized powder is dried and heat-treated at a temperature of 800-1200°C to produce partially calcined powder.

Ceramic pellets with eutectic microstructure are thus produced by filling the "partially" calcined powders into a graphite die; the SPS is performed under a nominal vacuum of 5-10 Pa, at a temperature of 1000-1500°C for 1-10 min; a constant pressure of 5-100 MPa, preferably 10-75 MPa is applied above 800 °C; the heating rate of SPS varies between 10-200 °C min$^{-1}$.

The applied pressure is limited to 5-100 MPa, preferably 10-75 MPa because (i) if the applied pressure is lower than 5 MPa, it fails to compact the sintering powder and provide the required contact between the punches and powder, thereby failing in providing the electric discharge conditions. (ii) Applied pressures larger than 100 MPa prevent the removal of gases produced by the decomposition of partially calcined powder, resulting in the alteration of gas compositions from electric discharge conditions.

If the SPS temperature is lower than the presintering heat treatment, SPS conditions fail to provide the local electrical discharger and, in turn, the local melting conditions. SPS at temperatures higher than 1500°C or temperature overshot due to fast heating causes extensive melting, whereby the sintering body turns to a melt that flows out of the die/punch's cavity.

The description above indicates that there are various eutectic microstructures that can be produced by semi-solid consolidation of powder synthesized by Pechini's method.

The method presented in this invention is particularly applicable to producing $Al_2O_3$-$Y_3Al_5O_{12}$-$ZrO_2$ composites with a $ZrO_2$ concentration of up to 20 mol%; the molar ratio of $Al_2O_3$ to $Y_2O_3$ composites containing various amounts of $ZrO_2$ is kept constant equal to $Al_2O_3/Y_2O_3$=3.3.

The presented method in this invention has implications for modifying the microstructure and can be used to produce various $Al_2O_3$-based eutectic composites with the composition of $Al_2O_3$-$RE_3Al_5O_{12}$, $REAlO_3$, or $RE_4AlO_9$, where RE is one of the rare earth elements, such as RE=Y, Sc, Dy, Ho, Er, Tm, Yb, La, or Ga.

Below, there are examples of the present invention.

### Example 1

Commercial yttrium oxide was dissolved in diluted nitric acid; then, the solution was mixed with an aqueous solution of $Al(NO_3)_3$ and zirconium tetra chloride; the ratio of solutions was chosen in a way to yield the eutectic composition of 73.0 mol % $Al_2O_3$, 22 mol% $Y_2O_3$, 5 mol% $ZrO_2$. The obtained solution was mixed for 2 h, and afterward, an aqueous solution of ethylene glycol and citric acid, with a molar ratio of 1:1 was added and mixed at 85 °C for 2 h. The polymerization was achieved by increasing the solution temperature to 150°C. The powder was dried overnight and subjected to heat treatment at 1000 °C for 3 h to partially remove the volatile species and promote the crystallization of $Y_3Al_5O_{12}$. The heat-treated powder was crushed and granulated.

The synthesized powder was poured into a graphite die with a diameter of about 10 mm and placed in a spark plasma sintering apparatus. First, the SPS chamber was evacuated until a vacuum of about 30 Pa is achieved; then, the temperature was increased to about 600 °C in 3 minutes; meanwhile, the medium vacuum of about 10 Pa was obtained in SPS chamber. The applied pressure by punches was kept at about 20 MPa to compact the powder. The temperature was increased to 800 °C at a constant heating rate of 100 °C min$^{-1}$, and the applied pressure was increased to 35 MPa. Afterwards, the applied current was programmed to obtain a heating rate about 200 °C min$^{-1}$ to allow fast heating of the sintering powder, which resulted in the release of volatile gasses remaining in the powder due to partial calcination of the synthesized powder. This resulted in an increase in SPS chamber pressure and produced the electric discharge conditions according to Paschen's formula; electric discharges are produced at a pressure of 140 Pa in SPS chamber, resulting in partial melting, enabling consolidation of samples by semi-solid forming. The electric discharge conditions were kept for about 100 s. Also, the liquid phase enabled the obtaining of eutectic microstructures consisting of large ordered grains enclosing laminar eutectic areas.

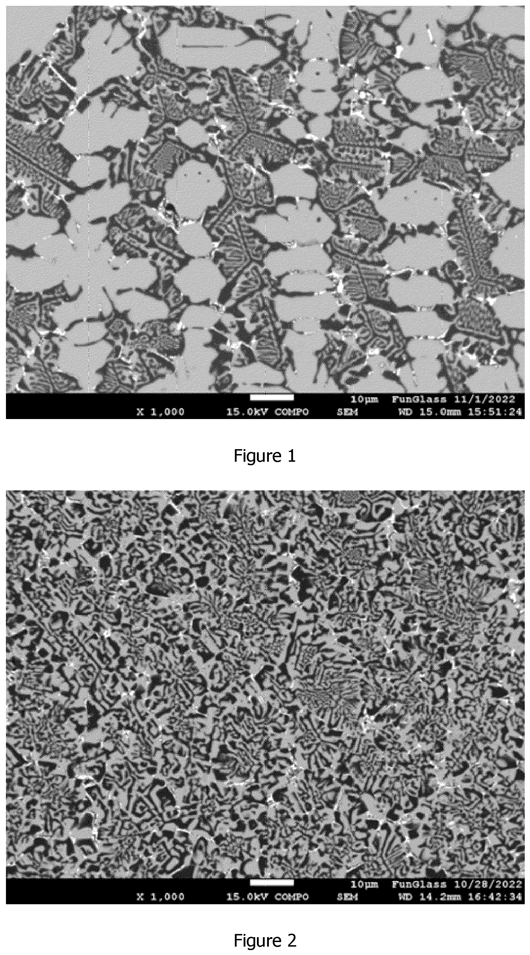

Figure 1 shows the scanning electron microscope micrograph of the pellet with large ordered grains enclosing the laminar eutectic areas' microstructure thus produced. The eutectic microstructure produced in this example consists of partitioning $Y_3A_5O_{12}$ grains that entrapped $Al_2O_3/Y_3Al_5O_{12}$ laminar microstructure.

### Example 2

Powder with a chemical composition similar to the above Example 1 was synthesized following the process presented in the Example 1. However, different amounts of ethylene glycol and citric acid with a molar ratio of 1:1.05 to 1:1.15 were used to produce the residual volatile species in the powder. The synthesized powder was dried and subjected to a heat treatment at 1000 °C for 3 h to produce partially calcined composite powder.

The synthesized powder was poured into a graphite die with a diameter of about 10 mm and consolidated following an SPS schedule similar to the one presented in the Example 1; the electric discharge conditions were obtained when the temperature was increased to 910 °C, and the vacuum was decreased to 150 Pa.

A scanning electron microscope photograph of such produced ceramic compact with eutectic microstructure that resembles a wootz steel laminar pattern is shown in Figure 2.

### Example 3

$Al_2O_3$-$Y_3Al_5O_{12}$-$ZrO_2$ composite powder, with a chemical composition 73 mol % $Al_2O_3$, 22 mol% $Y_2O_3$, 5 mol % $ZrO_2$, was synthesized following the process presented in the above Example 1. The powder was fully calcined by performing heat treatment at 1200 °C for 6 h. The calcined powder was crushed and granulated using pan granulation.

The fully calcined powder was consolidated using SPS. Briefly, the samples were rapidly heated to 600 °C in 3 min, and heated at a constant heating rate of 100°C min$^{-1}$ to 1300 °C, and then the temperature was kept for 15 min. A constant applied pressure of 75 MPa was applied above 700 °C, and the SPS chamber was kept under a vacuum of 5 Pa during the process.

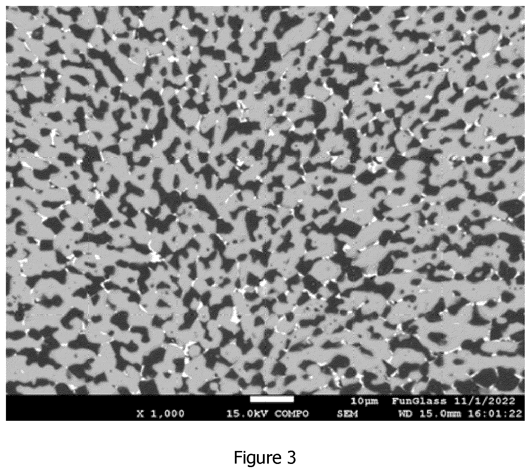

The produced samples were characterized by $Al_2O_3$ grains randomly dispersed in an interconnected $Y_3Al_5O_{12}$ matrix, as shown in Figure 3.

The above description points out that, according to this invention, $Al_2O_3$-based eutectic ceramics with various microstructural features can be produced. The microstructural features of samples can be tailored by modifying the gases released from the synthesized powder during SPS process. The composition and amount of released gases can be controlled by the heat treatment and the SPS temperature and pressure program to provide spark conditions according to Paschen's empirical formula (Paschen's law). The ability to tailor the microstructural features has implications for various industrial applications. Moreover, the method of semi-solid forming is applicable to various eutectic ceramic compositions.

**Industrial Applicability**

The method presented in this invention can be used to produce ceramic composites in various applications, including anti-corrosive parts, machinable ceramics, milling media such as balls and lining, products for high-temperature ceramics sintering furnaces including heat exchangers and furniture, parts, and molds for die-casting, ceramic parts for textile industry e.g., friction discs, thread guides, and cutters.

**Claims**

1. A method for producing $Al_2O_3$-based eutectic ceramics composites with the composition of $Al_2O_3$-RE$_3$Al$_5$O$_{12}$, REAlO$_3$, or RE$_4$AlO$_9$, where RE is one of the rare earth elements chosen from the group composed of Y, Sc, Dy, Ho, Er, Tm, Yb, La, or Ga, comprising synthesizing composite powders following Pechini's method and consolidating the powder using a spark plasma sintering apparatus by applying constant pressure of 5-100 MPa, heating rate between 10 - 200°C min$^{-1}$, and dwelling temperature and time of 1000-1500°C and 1-10 min, respectively **characterized in that** the powders are synthesized using Pechini's method with the use of citric acid and ethylene glycol as gelation agents, and the synthesized powders are heat-treated at temperatures between 600 and 1200 °C and dwelling time between 3 and 24h, wherein eutectic microstructure of produced ceramic material is determined by concentration of the gelation agents and conditions of the heat treatment.

2. $Al_2O_3$-based eutectic ceramics composites with the composition of $Al_2O_3$-RE$_3$Al$_5$O$_{12}$, REAlO$_3$, or RE$_4$AlO$_9$, where RE is one of the rare earth elements chosen from the group composed of Y, Sc, Dy, Ho, Er, Tm, Yb, La, or Ga, with eutectic microstructure, including an irregular structure with wootz steel microstructure, complex-regular laminar, mixed dendritic/laminar, and continuum matrix with randomly dispersed secondary phase, produced by the method according to claim 1.

Figure 1

Figure 2

7

Figure 3

Europäisches
Patentamt

European
Patent Office

Office européen
des brevets

# EUROPEAN SEARCH REPORT

**Application Number**

EP 25 15 5121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | VAKHSHOURI MARYAM ET AL: "Al2O3/Y3Al5O12 (YAG)/ZrO2 composites by single-step powder synthesis and spark plasma sintering", JOURNAL OF THE EUROPEAN CERAMIC SOCIETY, vol. 44, no. 12, 1 September 2024 (2024-09-01), pages 7180-7188, XP093286376, AMSTERDAM, NL ISSN: 0955-2219, DOI: 10.1016/j.jeurceramsoc.2024.05.004 * whole document, but see in particular 2. Experimental Procedure; Table 1 & figs.5(a)-(c) * | 1,2 | INV. C04B35/117 C04B35/119 C04B35/44 C04B35/645 C04B35/653 |
| X | PRNOVÁ ANNA ET AL: "Y3Al5O12-[alpha]-Al2O3 composites with fine-grained microstructure by hot pressing of Al2O3-Y2O3 glass microspheres", JOURNAL OF THE EUROPEAN CERAMIC SOCIETY, ELSEVIER, AMSTERDAM, NL, vol. 40, no. 3, 18 October 2019 (2019-10-18), pages 852-860, XP085985296, ISSN: 0955-2219, DOI: 10.1016/J.JEURCERAMSOC.2019.10.017 [retrieved on 2019-10-18] | 2 | |
| A | * 2.Materials and Methods; figures 9 & 10 * | 1 | TECHNICAL FIELDS SEARCHED (IPC) C04B |

-/--

The present search report has been drawn up for all claims

| Place of search | Date of completion of the search | Examiner |
|---|---|---|
| Munich | 13 June 2025 | Munro, Brian |

EPO FORM 1503 03.82 (P04C01)

Europäisches
Patentamt

European
Patent Office

Office européen
des brevets

# EUROPEAN SEARCH REPORT

**Application Number**

EP 25 15 5121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HARADA ET AL: "Fabrication of Y3Al5O12-Al2O3 eutectic materials having ultra fine microstructure", JOURNAL OF THE EUROPEAN CERAMIC SOCIETY, ELSEVIER, AMSTERDAM, NL, vol. 28, no. 1, 26 October 2007 (2007-10-26), pages 235-240, XP022316948, ISSN: 0955-2219, DOI: 10.1016/J.JEURCERAMSOC.2007.05.014 * 2. Experimental Procedure; Figs. 4 & 9 * | 1,2 | |
| X | LIU DIANGUANG ET AL: "Preparation of Al2O3-Y3Al5O12-ZrO2eutectic ceramic by flash sintering", SCRIPTA MATERIALIA, ELSEVIER, AMSTERDAM, NL, vol. 114, 21 December 2015 (2015-12-21), pages 108-111, XP029389450, ISSN: 1359-6462, DOI: 10.1016/J.SCRIPTAMAT.2015.12.002 * p.108, 1st and 2nd full paragraphs in the righr hand col.; figs.2(a)-(d) * | 1,2 | **TECHNICAL FIELDS SEARCHED (IPC)** |
| X | GAO LIAN ET AL: "Superfast Densification of Oxide/Oxide Ceramic Composites", JOURNAL OF THE AMERICAN CERAMIC SOCIETY, vol. 82, no. 4, 1 April 1999 (1999-04-01), pages 1061-1063, XP093286378, US ISSN: 0002-7820, DOI: 10.1111/j.1151-2916.1999.tb01874.x * II. Experimental Proceedings; figs. 1-3 * | 1,2 | |

-/--

The present search report has been drawn up for all claims

| Place of search | Date of completion of the search | Examiner |
|---|---|---|
| Munich | 13 June 2025 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 15 5121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG HUI ET AL: "Reaction assisted flash sintering of Al2O3YAG ceramic composites with eutectic composition", CERAMICS INTERNATIONAL, vol. 45, no. 10, 28 March 2019 (2019-03-28), pages 13551-13555, XP085682000, ISSN: 0272-8842, DOI: 10.1016/J.CERAMINT.2019.03.196 * p.13352, 2nd and 3rd full paragraphs; fig. 3(a)-(d) * | 1,2 | |
| X | HARADA Y ET AL: "Fabrication of dense material having homogeneous GdAlO3-Al2O3 eutectic-like microstructure with off-eutectic composition by consolidation of the amorphous", JOURNAL OF THE EUROPEAN CERAMIC SOCIETY, ELSEVIER, AMSTERDAM, NL, vol. 29, no. 11, 1 August 2009 (2009-08-01), pages 2419-2422, XP026139804, ISSN: 0955-2219, DOI: 10.1016/J.JEURCERAMSOC.2009.01.017 [retrieved on 2009-02-20] * 2. Experimental; figure 4 * | 1,2 | TECHNICAL FIELDS SEARCHED (IPC) |
| X | EP 1 209 137 A1 (SUMITOMO COAL MINING [JP]; OMORI MAMORU [JP]) 29 May 2002 (2002-05-29) * examples; figs. 1 & 2 * | 1,2 | |

The present search report has been drawn up for all claims

| Place of search | Date of completion of the search | Examiner |
|---|---|---|
| Munich | 13 June 2025 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 5121

This annex lists the patent family members relating to the patent documents cited in  the above-mentioned European search report.
The members are as contained in the European Patent Office EDP file on
The European Patent Office is in no way liable for these particulars which are merely given for the purpose of information.

13-06-2025

| Patent document cited in search report | | Publication date | Patent family member(s) | | Publication date |
|---|---|---|---|---|---|
| EP 1209137 | A1 | 29-05-2002 | AT | E420843 T1 | 15-01-2009 |
| | | | CN | 1353676 A | 12-06-2002 |
| | | | CN | 101445361 A | 03-06-2009 |
| | | | EP | 1209137 A1 | 29-05-2002 |
| | | | ES | 2322325 T3 | 19-06-2009 |
| | | | JP | 4824847 B2 | 30-11-2011 |
| | | | JP | 2000281451 A | 10-10-2000 |
| | | | US | 6592798 B1 | 15-07-2003 |
| | | | WO | 0058235 A1 | 05-10-2000 |

EPO FORM P0459

For more details about this annex : see Official Journal of the European Patent Office, No. 12/82